# EUROPÄISCHE PATENTSCHRIFT

(11) **EP 1 614 205 B1**
(45) Veröffentlichungstag und Bekanntmachung des Hinweises auf die Patenterteilung: **01.03.2017**
(21) Anmeldenummer: 04725033.7
(22) Anmeldetag: 01.04.2004
(51) Int. Cl.: H02K 1/20, H02K 1/32, H02K 9/16

(54) **ELEKTRISCHE MASCHINE MIT GEKÜHLTEN STÄNDER- UND LÄUFERBLECHPAKETEN UND WICKLUNGEN**
ELECTRIC MACHINE PROVIDED WITH COOLED METAL STACKS AND WINDINGS OF THE STATOR ROTOR THEREOF
MACHINE ELECTRIQUE A EMPILAGES DE TOLES ET BOBINES DE STATOR ET DE ROTOR REFROIDIS

(30) Priorität: 16.04.2003 DE 10317593
(43) Veröffentlichungstag der Anmeldung: 11.01.2006
(73) Patentinhaber: Siemens Aktiengesellschaft, 80333 München (DE)
(72) Erfinder: PFANNSCHMIDT, Bernd, 90574 Rosstal (DE); PITTIUS, Ekkehard, 91154 Roth (DE)
(86) Internationale Anmeldenummer: PCT/EP2004/003475
(87) Internationale Veröffentlichungsnummer: WO 2004/093292

(56) Entgegenhaltungen:
- EP-A- 0 387 743
- DE-A- 3 925 337
- DE-C- 528 381
- DE-C- 680 039
- DE-C- 19 742 255
- FR-A- 2 349 228
- GB-A- 230 137
- US-A- 1 196 345
- US-A- 4 352 034
- PATENT ABSTRACTS OF JAPAN Bd. 0110, Nr. 59 (E-482), 24. Februar 1987 (1987-02-24) -& JP 61 218333 A (HITACHI LTD), 27. September 1986 (1986-09-27)
- PATENT ABSTRACTS OF JAPAN Bd. 2000, Nr. 13, 5. Februar 2001 (2001-02-05) -& JP 2000 278914 A (MITSUBISHI ELECTRIC CORP), 6. Oktober 2000 (2000-10-06)
- PATENT ABSTRACTS OF JAPAN Bd. 0052, Nr. 05 (E-088), 25. Dezember 1981 (1981-12-25) -& JP 56 125941 A (TOSHIBA CORP), 2. Oktober 1981 (1981-10-02)

## Beschreibung

Die vorliegende Erfindung betrifft eine elektrische Maschine mit einem Gehäuse, einem Ständerblechpaket und einem Läuferblechpaket, die in dem Gehäuse angeordnet sind, wovon mindestens eines axial verlaufende Kühlkanäle besitzt, sowie Wickelkopfräumen an den Stirnseiten der beiden Blechpakete. Ferner betrifft die vorliegende Erfindung ein entsprechendes Verfahren zum Kühlen einer elektrischen Maschine durch axiales Durchströmen mindestens eines Kühlkanals eines Läuferblechpakets und/oder Ständerblechpakets mit einem Kühlmedium.

Elektromotoren, insbesondere Asynchronmaschinen, werden üblicherweise durch Fremd- oder Eigenbelüftung gekühlt. Bei Normmotoren kleiner Leistung genügt in der Regel eine Oberflächenkühlung. Traktionsmaschinen kleiner und mittlerer Leistung erfordern eine hochwertigere Kühlung im Ständer und Läufer. Hierzu werden axial verlaufende Kühlkanäle im Ständer und Läufer einseitig mit einem Kühlmedium beschickt. Bei Industriemaschinen mittlerer und großer Leistung sind ebenfalls im Läufer axiale Kühlkanäle vorgesehen. Die Kühlkanäle werden einseitig oder beidseitig mit Kühlluft versorgt und der Austritt der Kühlluft erfolgt durch radiale Kühlkanäle zwischen mehreren Teilblechpaketen. Um die Blechpaketlänge nicht zu groß werden zu lassen, sind die Luftspalte zwischen den Teilblechpaketen nur wenige Millimeter breit.

Ein Problem bei der Kühlung mit Umgebungsluft besteht darin, dass die Luft mit Partikeln verschmutzt sein kann. Bei starkem Schmutzanteil in der Kühlluft würden sich jedoch schmale Kühlschlitze verhältnismäßig rasch zusetzen und die Kühlwirkung beeinträchtigen. Um dies zu vermeiden, ist bei Industriemaschinen meist ein Wärmetauscher vorgesehen. Damit ist gewährleistet, dass nur saubere Luft im Inneren der Maschine zirkuliert. Bei Traktionsmaschinen hingegen steht wegen der beengten Platzverhältnisse kein Einbauraum für einen Wärmetauscher zur Verfügung. Außerdem erhöht dieser Wärmetauscher die Temperatur der inneren Kühlluft, was wiederum die Leistungsfähigkeit einschränkt.

Wenn der Wärmetauscher nicht eingesetzt werden kann, muss die Kühlluft für die schmalen Kühlschlitze mittels feinporiger Luftfilter gefiltert werden. Bei großem Schmutzanfall bedeutet dies sehr häufige Filtermattenwechsel, was unerwünscht und beispielsweise bei Muldenkippern im Tagebau nicht praktikabel ist.

Eine gattungsgemäße elektrische Maschine ist beispielsweise aus dem Dokument US 2 610 992 bekannt. Die dort beschriebenen Ständer- und Läuferblechpakete weisen axial verlaufende Luftkühlkanäle auf.

In der deutschen Offenlegungsschrift DE 44 13 389 ist ferner eine elektrische Maschine beschrieben, die mit zwei auf einer gemeinsamen Welle in axialem Abstand voneinander angeordneten Rotorblechpaketen, zwei in entsprechendem Abstand voneinander angeordneten Statorblechpaketen und einer Kühleinrichtung, die eine Luftfördereinrichtung sowie in axialer Richtung verlaufende Kühlkanäle aufweist, besitzt. Letztere sind infolge des axialen Abstands der Blechpakete je in zwei Abschnitte unterteilt und derart mit der Luftfördereinrichtung verbunden, dass die beiden Abschnitte jedes Kühlkanals in entgegengesetzter Richtung durchströmt werden. In dem Ringraum zwischen den Blechpaketen wird die Kühlluft aus einer axialen Richtung in eine radiale Richtung oder umgekehrt umgelenkt. Der axiale Abstand der Blechpakete ist dabei so gewählt, dass der im Ringraum zwischen den Blechpaketen für die Kühlluft zur Verfügung stehende Strömungsquerschnitt etwa gleich der Summe der Strömungsquerschnitte aller in diesen Ringraum unmittelbar mündenden Kühlkanäle ist.

Aus der FR 2 349 228 ist eine elektrische Maschine mit einem Gehäuse, einem Ständerblechpaket und einem Läuferblechpaket, die in dem Gehäuse angeordnet sind, bekannt. Das Rotorblechpaket weist axial verlaufende Kühlkanäle auf. Das Kühlmittel wird in einem Wickelkopfraum eingeleitet, durchströmt einen Kühlkanal eines Blechpakets und gelangt von dort in den zweiten Wickelkopfraum. In diesem zweiten Wickelkopfraum verlangsamt sich jedoch die Geschwindigkeit des Kühlmittels und es kommt zu Schmutzablagerungen von Partikeln, die in dem Kühlmittel enthalten sind.

Die Druckschrift JP 2000 27 89 14 zeigt eine elektrische Maschine mit Abschottungen im Bereich des Kühlmittelauslasses. Derartige Abschottungen erhöhen die Gefahr von Ablagerungen.

In der Druckschrift GB 230 137 ist eine elektrische Maschine mit einem Röhrensystem zur Kühlung beschrieben. Es werden dort aber nicht die Wickelköpfe umströmt.

Ebenso zeigen die Dokumente EP 0 387 743 A1 und DE 197 42 255 C1 jeweils elektrische Maschinen mit axialen Kühlmittelrohren. Es erfolgt dort aber nicht eine unmittelbare Kühlung der Wickelköpfe mit unverbrauchtem Kühlmittel.

Die Aufgabe der vorliegenden Erfindung besteht darin, bei intensiver Kühlung einer elektrischen Maschine ein hohes Maß an Schmutzunempfindlichkeit zu gewährleisten.

Erfindungsgemäß wird diese Aufgabe gelöst durch eine elektrische Maschine nach Anspruch 1.

Erfindungsgemäß wird diese Aufgabe auch gelöst durch eine elektrische Maschine nach Anspruch 4.

Eine hohe Kühlleistung und geringe Schmutzempfindlichkeit wird durch beidseitige Kühlung und Vermeidung kleiner Spalte und Bohrungen erreicht. Die Kühlluft wird vorzugsweise auf beiden Stirnseiten (Antriebs- und Nicht-Antriebsseite) axial und/ oder radial in das Motorgehäuse geblasen und tritt nach dem Strömen über die Ständerwickelköpfe beziehungsweise Läuferkurzschlussringe in die axialen Ständer und Läuferkühllöcher ein. Dabei sind auch hier die Durchmesser der Kühllöcher und die Luftgeschwindigkeit so groß gewählt, dass sich kein Schmutz ablagern kann. Der Luftaustritt ist durch entsprechende Kanäle, d. h. Kühlkanalfortsätze, vom Lufteintritt getrennt.

Am Ständerblechpaket sind Rohre als Kühlkanalfortsätze durch das Lagerschild der elektrischen Maschine geführt. Damit kann die Abluft durch den Wickelkopfraum, in den das Kühlmittel eingeführt wird, nach außen geleitet werden.

In dem Ständerblechpaket und/oder Läuferblechpaket sind in Umfangsrichtung mehrere Kühlkanäle verteilt und jeder zweite Kühlkanal besitzt an der einen Stirnseite des jeweiligen Blechpakets Kühlkanalfortsätze und die anderen Kühlkanäle weisen ihre Kühlkanalfortsätze an den anderen Stirnseiten des jeweiligen Blechpakets auf. Damit werden die Blechpakete in Umfangsrichtung abwechselnd in beiden axialen Richtungen durchströmt.

Am Läuferblechpaket sind die Kühlkanalfortsätze vorzugsweise Bestandteile des Läuferdruckrings beziehungsweise in diesen eingearbeitet. Damit kann das abzuführende Kühlmittel durch den Wickelkopfraum bis zum Lagerschild transportiert werden und von dort durch Aussparungen im Lagerschild nach außen gelangen. Hierzu sollten zwischen dem Lagerschild und dem Läuferdruckring Dichtungen vorgesehen sein, so dass das abzuführende Kühlmittel nicht in den Wickelkopfraum beziehungsweise in das Lager strömt.

Die vorliegende Erfindung wird nun anhand der beigefügten Zeichnungen näher erläutert, in denen zeigen:
- FIG 1: eine Querschnittsansicht eines Asynchronmotors; und
- FIG 2: einen Querschnitt durch einen Asynchronmotor gemäß einer Ausführungsform der vorliegenden Erfindung.

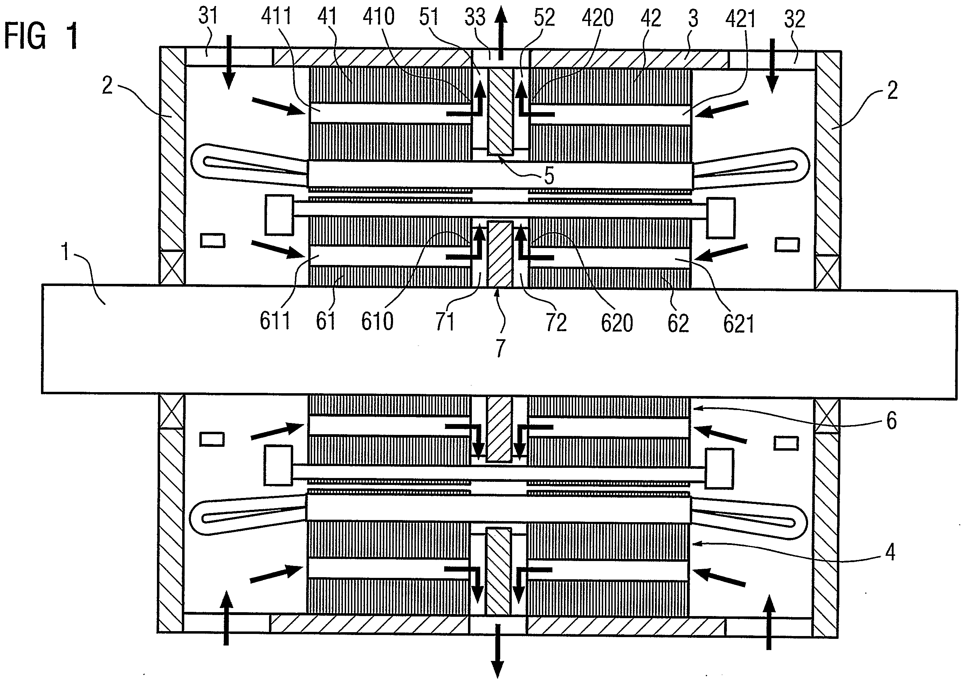

Die nachfolgenden Ausführungsbeispiele stellen bevorzugte Ausführungsformen der vorliegenden Erfindung dar. Zum besseren Verständnis der Erfindung wird jedoch zunächst anhand von FIG 1 eine nicht beanspruchte elektrische Maschine erläutert. Die in FIG 1 dargestellte Asynchronmaschine besitzt eine Welle 1, die in Lagerschilden 2 gelagert ist. Ein in Umfangsrichtung verlaufender Gehäuseabschnitt 3 vervollständigt das Gehäuse der elektrischen Maschine.

Der Ständer 4 der Asynchronmaschine besitzt zwei Teilblechpakete 41 und 42, die gegeneinander verpresst sind. Dazwischen befindet sich ein Ring 5 mit radial verlaufenden Stegen 51, 52 an beiden Seiten.

Der auf die Welle 1 aufgeschrumpfte Läufer 6 ist ähnlich aufgebaut. Auch er besitzt zwei Läuferblechpakete 61 und 62 sowie einen dazwischenliegenden Ring 7 mit radial verlaufenden Stegen 71 und 72 an beiden Seiten.

Das Kühlmittel strömt an beiden Seiten des Ständerblechpakets durch Aussparungen 31 und 32 in den jeweiligen Wickelkopfraum. Von dort strömt es durch Kühlkanäle 411 und 421 des Ständers 4 zu dem Spalt zwischen den Ständerblechpaketen 41, 42, in dem sich der Ring 5 befindet. Die Stege 51 und 52 sorgen für entsprechende Strömungskanäle in radialer Richtung nach außen. Durch eine Aussparung 33 strömt das Kühlmittel aus dem Gehäuse der Asynchronmaschine.

Ein Anteil des in die Aussparungen 31, 32 einströmenden Kühlmittels strömt an den Wickelköpfen und Kurzschlussringen vorbei in Kühlkanäle 611 und 621 der Läuferblechpakete 61, 62. Auch hier werden die axial nach innen verlaufenden Kühlmittelströme in der Mitte durch den Ring 7 beziehungsweise dessen Stege 71, 72 radial nach außen gelenkt.

Die Ringe 5 und 7 besitzen damit die doppelte Funktion der Unterstützung der Luftführung und der Stabilisierung des Blechpakets. Die radial gerade nach außen führenden Stege 71, 72 fördern die Luft durch die Drehbewegung des Läufers nach außen. Falls die Asynchronmaschine nur für eine Drehrichtung vorgesehen ist, können die Stege 71, 72, gegebenenfalls auch die Stege 51, 52 in Umfangsrichtung entsprechend geschwungen sein, um Störgeräusche zu vermindern.

Zur Reduzierung des Strömungswiderstands können die Kanten 410, 420, 610, 620 abgephast oder abgerundet sein (in der Zeichnung nicht dargestellt). Hierdurch lässt sich die radiale Strömungsgeschwindigkeit nach dem Umlenken erhöhen.

Zum Schutz vor Abrasion sind die im Spalt liegenden Teile der Ständerspulen mit einer Schutzhülle (ebenfalls nicht dargestellt) umgeben.

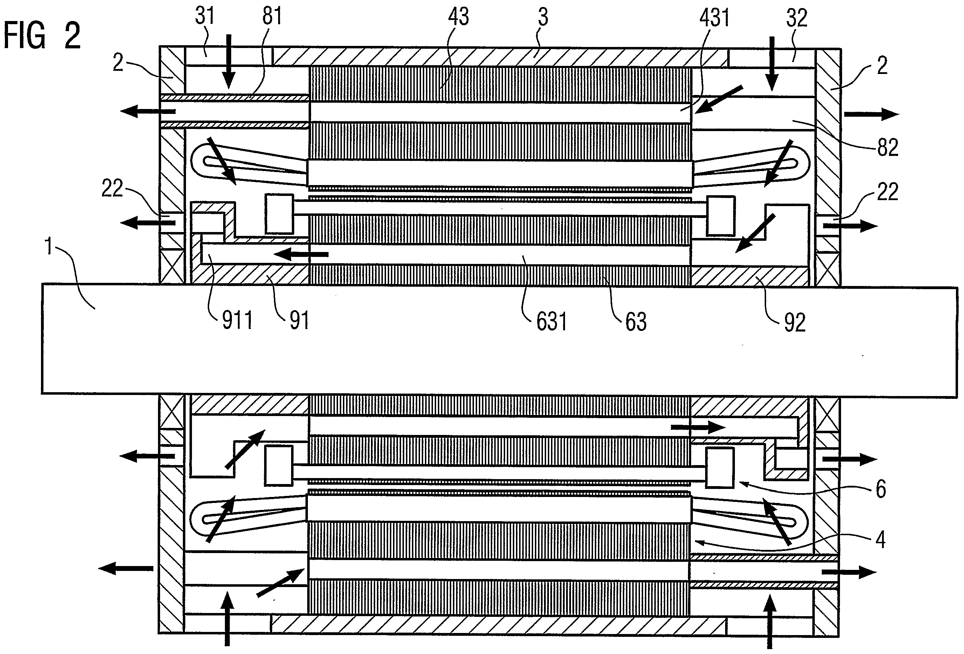

Eine Ausführungsform der vorliegenden Erfindung ist in FIG 2 dargestellt. Die Bauteile, die denen elektrischen Maschine von FIG 1 entsprechen, sind mit den gleichen Bezugsziffern gekennzeichnet. Diesbezüglich wird auf die Beschreibung von FIG 1 verwiesen.

Das einteilige Ständerblechpaket 43 ist mit einem axial verlaufenden Kühlkanal 431 versehen. Im linken Wickelkopfraum (bezogen auf die zeichnerische Darstellung) wird der Kühlkanal 431 durch ein Röhrchen 81 als Kühlkanalfortsatz weitergeführt. Das Röhrchen 81 durchdringt an seinem anderen Ende das Lagerschild 2. Bei dem in Umfangsrichtung nächsten axialen Kühlkanal durch das Ständerblechpaket 43 verläuft das Röhrchen 82 durch den rechten Wickelkopfraum und das rechte Lagerschild 2. Damit strömt das Kühlmittel in dem in der oberen Hälfte von FIG 2 nicht dargestellten Kühlkanal (in der unteren Hälfte dargestellt) nach rechts und über das Röhrchen 82 nach außen. In dem in Umfangsrichtung davor liegenden, in FIG 2 geschnittenen Kühlkanal 431 dagegen, strömt das Kühlmittel nach links und durch das Röhrchen 81 nach außen.

Hinsichtlich der Kühlung des Läuferblechpakets ergibt sich ein ähnliches Bild. Das einteilige Läuferblechpaket 63 weist einen axialen Kühlkanal 631 auf. Das Läuferblechpaket 63 wird von Läuferdruckringen 91, 92 zusammengehalten. In den linken Läuferdruckring 91 ist ein Strömungskanal 911 eingearbeitet. Der Strömungskanal 911 mündet in eine Aussparung 21 im Lagerschild 2. Somit ergibt sich für das Kühlmittel ein Strömungsverlauf von außen durch die Aussparung 32 in das Gehäuse der Asynchronmaschine, durch den rechten Wickelkopfraum an den Wickelköpfen und dem Kurzschlussring vorbei in den Kühlkanal 631, durch den Strömungskanal 911 als Kühlkanalfortsatz und schließlich durch die Aussparung 21 im Lagerschild nach außen. In dem in Umfangsrichtung nächsten Kühlkanal des Läuferblechpakets 63 erfolgt die Strömung in entgegengesetzter Richtung. Hierzu ist in dem Läuferdruckring 92 ein entsprechender Strömungskanal (nicht dargestellt) vorgesehen, der das Kühlmittel aus der Aussparung 22 im rechten Lagerschild führt.

Zwischen dem Läuferdruckring 91, 92 und dem Lagerschild 2 ist eine nicht dargestellte Dichtung, z.B. eine Labyrinthdichtung angeordnet, um zu verhindern, dass ein Teil der Kühlluft direkt wieder nach außen tritt.

Die axial verlaufenden Kühlkanäle sowohl in der Ausführungsform gemäß FIG 1 als auch in der gemäß FIG 2 können radial und in Umfangsrichtung in dem Läufer- und Ständerblechpaket beliebig angeordnet sein. Der Einfachheit halber sind in den Zeichnungen lediglich Kühlkanäle im Ständer- und Läuferblechpaket auf jeweils einer Umfangsfläche mit konstantem Radius dargestellt. Darüber hinaus kann die Strömungsrichtung der Kühlkanäle, insbesondere in der Ausführungsform von FIG 2, beliebig gewählt werden. Es sollte lediglich darauf geachtet werden, dass die Verteilung der Kühlkanäle mit unterschiedlichen Strömungsrichtungen in Umfangsrichtung etwa gleich verteilt ist. Somit lässt sich eine ungleichmäßige Kühlung der Blechpakete und der Wicklungen verhindern.

Eine erfindungsgemäße elektrische Maschine ist insbesondere in Umgebungen einsetzbar, wo die Kühlluft einen vergleichsweise hohen Schmutzanteil enthält.

Wärmetauscher sind aufgrund der beengten Platzverhältnisse bei Traktionsmaschinen nicht einsetzbar. Diese Wärmetauscher erhöhen die Temperatur der inneren Kühlluft, was die Leistungsfähigkeit der Traktionsmaschine verringert.

Ohne Wärmetauscher ist bei schmalen Schlitzen zwischen den Teilblechpaketen ein feinporiger Luftfilter erforderlich.

Bei großem Schmutzanteil in der Kühlluft bedeutet dies sehr häufige Filtermattenwechsel.

Deshalb eignet sich eine erfindungsgemäße elektrische Maschine insbesondere auch für den Antrieb von Muldenkippern im Tagebau.

## Patentansprüche

1. Elektrische Maschine mit
- einem Gehäuse (2,3),
- einem Ständerblechpaket (43) und einem Läuferblechpaket (63), die in dem Gehäuse (2,3) angeordnet sind, wovon das Ständerblechpaket (43) und das Läuferblechpaket (63) jeweils axial verlaufende Kühlkanäle (431,631) besitzen, und
- Wickelkopfräumen an den Stirnseiten der beiden Blechpakete (43,63),
- wobei an den Kühlkanälen (431,631) des Ständerblechpakets (43) in den Wickelkopfräumen Kühlkanalfortsätze (81,82) angeordnet sind, mit denen ein Kühlmedium aus dem Gehäuse (2,3) ableitbar ist,
- wobei die Kühlkanalfortsätze (81,82) an dem Ständerblechpaket (43) Rohre sind, die durch ein Lagerschild (2) der elektrischen Maschine nach außen geführt sind,
- wobei an den Kühlkanälen (431,631) des Läuferblechpakets (63) in den Wickelkopfräumen Kühlkanalfortsätze (81,82) angeordnet ist, wobei
- in dem Ständerblechpaket (43) und Läuferblechpaket (63) die Kühlkanäle (431,631) in Umfangsrichtung verteilt sind und jeder zweite Kühlkanal nur an der einen Stirnseite des jeweiligen Blechpakets (43,63) einen Kühlkanalfortsatz (81,82) besitzt und die anderen Kühlkanäle nur an der anderen Stirnseite des jeweiligen Blechpakets an Kühlkanalfortsätze angeschlossen sind, wobei
- das Kühlmedium die Kühlkanäle des Läuferblechpakets (63) und des Ständerblechpakets (43) in Umfangsrichtung abwechselnd in entgegengesetzten Richtungen durchströmt.

2. Elektrische Maschine nach Anspruch 1, wobei die Kühlkanalfortsätze an dem Läuferblechpaket (63) Bestandteil eines Läuferdruckrings (91,92) sind, in den Strömungskanäle (911) eingearbeitet sind.

3. Elektrische Maschine nach Anspruch 2, wobei die Strömungskanäle (911) in dem Läuferdruckring (91,92) das Kühlmittel durch das Lagerschild (2) führen und zwischen dem Läuferdruckring (91,92) und dem Lagerschild (2) eine entsprechende Dichtung angeordnet ist.

4. Verfahren zum Kühlen einer elektrischen Maschine nach einem der Ansprüche 1 bis 3 mit den Schritten
- axiales Durchströmen der Kühlkanäle (431,631) des Läuferblechpakets (63) und des Ständerblechpakets (43) mit einem Kühlmedium,
- Ableiten des Kühlmediums aus den Kühlkanälen (431,631) mittels eines Kühlkanalfortsatzes (81,82) aus dem Gehäuse (2,3), wobei
- die Kühlkanäle des Läuferblechpakets (63) und des Ständerblechpakets (43) in Umfangsrichtung abwechselnd von dem Kühlmedium in entgegengesetzten Richtungen durchströmt werden.

## Claims

1. Electrical machine having
- a housing (2, 3),
- a laminated stator core (43) and a laminated rotor core (63), which are arranged in the housing (2, 3) and of which the laminated stator core (43) and the laminated rotor core (63) in each case have axially extending cooling channels (431, 631), and
- end winding areas at the end sides of the two laminated cores (43, 63),
- wherein cooling channel protrusions (81, 82) are arranged at the cooling channels (431, 631) of the laminated stator core (43) in the end winding areas, it being possible with said cooling channel protrusions (81, 82) to deflect a coolant out of the housing (2, 3),
- wherein the cooling channel protrusions (81, 82) on the laminated stator core (43) are tubes, which are guided outward through a mounting plate (2) of the electrical machine,
- wherein cooling channel protrusions (81, 82) are arranged at the cooling channels (431, 631) of the laminated rotor core (63) in the end winding areas, wherein
- the cooling channels (431, 631) are distributed in the circumferential direction in the laminated stator core (43) and laminated rotor core (63), and every second cooling channel has a cooling channel protrusion (81, 82) only at one end side of the respective laminated core (43, 63), and the other cooling channels are connected to cooling channel protrusions only at the other end side of the respective laminated core, wherein
- the coolant flows through the cooling channels of the laminated rotor core (63) and of the laminated stator core (43) in the circumferential direction, alternately in opposite directions.

2. Electrical machine according to Claim 1, wherein the cooling channel protrusions on the laminated rotor core (63) are part of a rotor clamping ring (91, 92), into which flow channels (911) are incorporated.

3. Electrical machine according to Claim 2, wherein the flow channels (911) in the rotor clamping ring (91, 92) guide the coolant through the mounting plate (2), and a corresponding seal is arranged between the rotor clamping ring (91, 92) and the mounting plate (2).

4. Method for cooling an electrical machine according to one of Claims 1 to 3 having the following steps
- passing an axial flow of a coolant through the cooling channels (431, 631) of the laminated rotor core (63) and of the laminated stator core (43),
- deflection of the coolant out of the cooling channels (431, 631) by means of a cooling channel protrusion (81, 82) out of the housing (2, 3), wherein
- the coolant flows through the cooling channels of the laminated rotor core (63) and of the laminated stator core (43) in the circumferential direction, alternately in opposite directions.

## Revendications

1. Machine électrique comprenant
- une carcasse ( 2, 3 ),
- un paquet ( 43 ) de tôles statoriques et un paquet ( 63 ) de tôles rotoriques, qui sont disposés dans la carcasse ( 2, 3 ), le paquet ( 43 ) de tôles statoriques et le paquet ( 63 ) de tôles rotoriques ayant respectivement des canaux ( 431, 631 ) de refroidissement s'étendant axialement et
- des espaces de tête de bobine sur les côtés frontaux des deux paquets ( 43, 63 ) de tôles,
- dans laquelle, sur les canaux ( 431, 631 ) de refroidissement du paquet ( 43 ) de tôles statoriques, dans les espaces de tête de bobine, sont disposés des prolongements ( 81, 82 ) de canal de refroidissement, par lesquels un fluide de refroidissement peut être évacué de la carcasse ( 2, 3 ),
- dans laquelle les prolongements ( 81, 82 ) de canal de refroidissement sur le paquet ( 43 ) de tôles statoriques sont des tuyaux qui passent à l'extérieur à travers un flasque ( 2 ) de la machine électrique,
- dans laquelle des prolongements ( 81, 82 ) de canal de refroidissement sont disposés sur les canaux ( 431, 631 ) de refroidissement du paquet ( 63 ) de tôles rotoriques dans les espaces de tête de bobine, dans laquelle
- les canaux ( 431, 631 ) de refroidissement sont répartis dans la direction périphérique dans le paquet ( 43 ) de tôles statoriques et dans le paquet ( 63 ) de tôles rotoriques et un canal de refroidissement sur deux n'a un prolongement ( 81, 82 ) de canal de refroidissement, que de l'un des côtés frontaux du paquet ( 43, 63 ) de tôles respectif et les autres canaux de refroidissement ne sont raccordés, au prolongement de canal de refroidissement que de l'autre côté frontal du paquet de tôles respectif, dans laquelle
- le fluide de refroidissement passe en alternance, dans la direction périphérique dans des sens contraires, dans les canaux de refroidissement du paquet ( 63 ) de tôles rotoriques et du paquet ( 43 ) de tôles statoriques.

2. Machine électrique suivant la revendication 1, dans laquelle les prolongements de canal de refroidissement sur le paquet ( 63 ) de tôles rotoriques font partie d'un anneau ( 91, 92 ) de pression de rotor, dans lequel sont usinés des canaux ( 911 ) d'écoulement.

3. Machine électrique suivant la revendication 2, dans laquelle les canaux ( 911 ) d'écoulement, dans l'anneau ( 91, 92 ) de pression de rotor, font passer le fluide de refroidissement à travers le flasque ( 2 ) et une étanchéité adéquate est disposée entre l'anneau ( 91, 92 ) de pression du rotor et le flasque ( 2 ).

4. Procédé de refroidissement d'une machine électrique suivant l'une des revendications 1 à 3, comprenant les stades :
- on fait passer un fluide de refroidissement axialement dans les canaux ( 431, 631 ) de refroidissement du paquet ( 63 ) de tôles rotoriques et du paquet ( 43 ) de tôles statoriques,
- on évacue le fluide de refroidissement des canaux ( 431, 631 ) de refroidissement au moyen d'un prolongement ( 81, 82 ) de canal de refroidissement de la carcasse ( 2, 3 ), dans lequel
- on fait passer, en alternance, le fluide de refroidissement, dans des sens opposés, dans les canaux de refroidissement du paquet ( 63 ) de tôles rotoriques et du paquet ( 43 ) de tôles statoriques.
